# EUROPÄISCHE PATENTANMELDUNG

(11) **EP 2 712 852 A1**
(43) Veröffentlichungstag der Anmeldung: **02.04.2014**
(21) Anmeldenummer: 13186871.3
(22) Anmeldetag: 01.10.2013
(51) Int. Cl.: C03C 17/32, C03C 19/00, C03C 11/00

(54) **Verfahren zur Herstellung von farbigen Steinen**

(30) Priorität: 01.10.2012 DE 102012019212
(71) Anmelder: Legat, Heiner, 92703 Krummennaab (DE)
(72) Erfinder: Legat, Heiner, 92703 Krummennaab (DE)
(74) Vertreter: von Puttkamer · Berngruber

(57) **Zusammenfassung**

Die Erfindung betrifft ein Verfahren zur Herstellung von farbigen Steinen. Dabei werden in einem ersten Schritt aus in einem Mischer gemischten Glasschaumpartikeln und durch das dabei erfolgende Aneinanderschlagen derselben abgerundete Glasschaumsteine hergestellt und werden in einem nachfolgenden zweiten Schritt die abgerundeten Glasschaumsteine mit einer Farbbeschichtung versehen.

## Beschreibung

Verfahren zur Herstellung von farbigen Steinen nach dem Oberbegriff des Patentanspruches 1. Insbesondere eigen sich die nach diesem Verfahren hergestellten farbigen Steine zur Gestaltung von Drainageeindeckungen um Gebäude und Randeinfassungen im Garten, z. B. um Bäume und Beete etc., und als Füllmaterial für Gabionen, Gabionenzäune und Gabionenwände.

Die Herstellung von farbigen Steinen ist derzeit nur mit einem äußerst großen Aufwand möglich, weil wegen des großen Eigengewichts von natürlichen Steinen die mechanische Beanspruchung beim Einfärben in Trommel- oder Zwangsmischern so groß ist, dass eine farbige Beschichtung sehr schnell wieder durch das Aneinanderschlagen der Steine im Mischer abgetragen und beschädigt wird. Ein Tauchverfahren zum Einfärben von natürlichen Steinen ist wirtschaftlich sehr aufwendig, weil die so hergestellten farbigen Natursteine getrocknet werden müssen.

Die Aufgabe der vorliegenden Erfindung besteht daher darin, ein wirtschaftliches und daher praktisch anwendbares Verfahren zur Herstellung von farbigen Steinen zu schaffen.

Dieser Aufgabe wird durch ein Verfahren mit den Merkmalen des Patentanspruches 1 gelöst. Farbige Steine werde demgemäß dadurch hergestellt, dass aus Glasschaumpartikeln in einem ersten Verfahrensschritt in einem Mischer durch das beim Mischen erfolgende Aneinanderschlagen der Glasschaumpartikel abgerundete Glasschaumsteine hergestellt werden und dass in einem nachfolgenden zweiten Verfahrensschritt die abgerundeten Glasschaumsteine mit einer Farbbeschichtung versehen werden.

Der Vorteil des erfindungsgemäßen Verfahrens besteht darin, dass es eine äußerst wirtschaftliche Herstellung von Steinen in verschiedenen Farben ermöglicht. Vorteilhafterweise sind die nach den erfindungsgemäßen Verfahren wirtschaftlich hergestellten farbigen Steine extrem leicht, was zu einem geringen Verpackungsaufwand und zu günstigen Lagerkosten führt. Im Vergleich zu natürlichen Steinen, von denen ein Kubikmeter etwa 1000 bis 1500 Kilogramm wiegt, hat ein Kubikmeter der nach dem erfindungsgemäßen Verfahren hergestellten Glasschaumsteine ein Gewicht von etwa 160 Kilogramm. Wegen des geringen Eigengewichtes sind die beim Transport der nach dem erfindungsgemäßen Verfahren hergestellten Glasschaumsteine anfallenden Kosten extrem günstig, was insbesondere beim Export eine große Rolle spielt. Das gesamte Handling der erfindungsgemäßen Steine ist vergleichsweise einfach.

Die verwendeten Glasschaumpartikel werden bevorzugt aus einem plattenförmigen Glasschaumstoffmaterial hergestellt, das in eine gewünschte Kornfraktion zerbrochen wird. Dabei werden bevorzugt Glasschaumpartikel mit einer Kornfraktion verwendet, die in einen Bereich von 1 bis 20 Zentimetern liegt.

Um den beim Mischen und Aneinanderschlagen der Glasschaumsteine unerwünschten und überschüssigen Abrieb zu entfernen werden die Glasschaumsteine vorzugsweise nach dem ersten Schritt gesiebt. Nach dem ersten Schritt können bedarfsweise aus den Glasschaumsteinen vorbestimmte Korngrößen ausgesiebt werden.

Besonders vorteilhaft wird eine Farbbeschichtung aufgebracht, die aus einer oder zwei aushärtbaren Komponenten, beispielsweise aus PUR, Epoxy, Acryl oder Polyester besteht.

Das Mischen der Glasschaumpartikel wird beim ersten Schritt vorzugsweise in einem Trommel- oder Zwangsmischer oder in einem Freifallmischer ausgeführt wird. Das Aufbringen der Farbbeschichtung wird beim zweiten Schritt in einem Mischer, vorzugsweise einem Freifall-, Trommel- oder Zwangsmischer ausgeführt.

Vorteilhafte Ausgestaltungen des erfindungsgemäßen Verfahrens zur Herstellung von farbigen Steinen gehen aus den Unteransprüchen hervor.

Im Folgenden werden die Erfindung und deren Ausgestaltungen im Zusammenhang mit den Figuren näher erläutert. Es zeigen:
Figur 1 in perspektivischer Darstellung Bruchsteine aus Glasschaum,
Figur 2 gerundete Glasschaumsteine und
Figur 3 farbige Glasschaumsteine, die nach erfindungsgemäßen Verfahren hergestellt wurden.

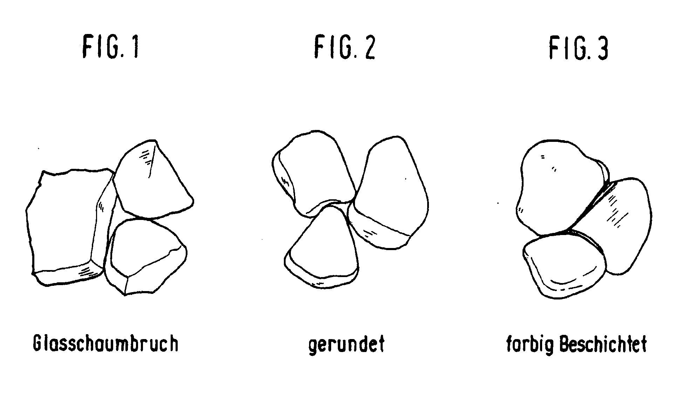

Zu der Erfindung führten die folgenden Überlegungen. Da es nicht oder nur mit sehr großem Aufwand möglich ist, Natursteine, die größer als 16 Millimeter sind, wirtschaftlich mit einer Farbschicht zu versehen, können als Ausgangsmaterial für die Herstellung von farbigen Steinen Glasschaumprodukte, beispielsweise in der Form von Glasschaumschotter oder Glasschaumgranulat, verwendet werden. Derartige Glasschaumprodukte sind vorzugsweise aus Recyclingglas kostengünstig herstellbar. Sie besitzen zudem vorteilhafterweise ein relativ kleines Gewicht. Glasschaumschotter, der aus eckigen Schaumstoffsteinen besteht, die eine geeignete Kornfraktion besitzen, kann, damit er eine geeignete und natürliche Steinoptik erhält, vorzugsweise in einem Trommel- oder Zwangsmischer, beispielsweise in einem Freifallmischer, getrommelt werden, so dass die Kanten der eckigen Steine abgerundet werden, wie dies die Figur 2 zeigt. Die im Mischer getrommelten Glasschaumsteine besitzen wegen ihrer abgerundeten Form eine sehr gute Kantenbruchfestigkeit.

Als Ausgangsmaterial eignet sich vorzugsweise ein Glasschaummaterial in Plattenform, das zum Erhalt einer gewünschten Kornfraktion aufgebrochen wird. Die Größe der aufgebrochenen Schaumstoffsteine hängt damit von der Dicke des plattenförmigen Glasschaummaterials ab. Es ist daher die Herstellung von Glasschaumsteinen in nahezu jeder Größe bzw. Kornfraktion denkbar.

Die gemäß Figur 2 abgerundeten Steine werden vor ihrer weiteren Behandlung gesiebt. Dabei wird der überschüssige Abrieb, der beim Runden der Kanten entsteht, von dem abgerundeten Steinmaterial entfernt. Weiterhin können je nach Bedarf die anfallenden verschiedenen Kornfraktionen nach ihrer Korngröße abgesiebt und klassifiziert werden.

Als Grundlage für die nachfolgende Farbbeschichtung können alle gängigen 1 oder 2-Farbkomponenten-Systeme, wie beispielsweise PUR, Epoxy, Acryl, Polyester etc. verwendet werden, die für ein Mischverfahren geeignet sind. Der Vorteil einer 2-Komponenten-Beschichtung besteht darin, dass das System innerhalb weniger Minuten, zum Beispiel innerhalb von 5 bis 120 Minuten aushärtet. Diese Aushärtezeiten können je nach Bedarf der Produktion angepasst werden, um einen möglichst effektiven Produktionszeitraum zu erreichen.

Für Glasschaumsteine, die für die Verwendung im Außenbereich gedacht sind, verwendet man vorzugsweise ein 2-Komponenten-Acryl, wegen der sehr guten Witterungsstabilität.

Das Auftragen der Farbe erfolgt vorzugsweise in geeigneten Mischern, wie beispielsweise Freifall-oder Zwangsmischern. Ein wesentlicher Effekt der Verwendung der Glasschaummaterialien besteht dabei darin, dass wegen des geringen Gewichtes der abgerundeten Glasschaumsteine die aufgetragene Farbschicht beim Mischen nicht durch das Aneinanderschlagen beschädigt bzw. abgetragen wird, wie dies beim Auftragen von Farbkomponenten auf schwere Natursteine der Fall ist.

Durch Abstimmen der Mischzyklen, der Farbmengen oder durch unterschiedliche Dicken der aufgetragenen Farben können Effekte erzielt werden, die dem Aussehen von natürlichen Steinen im Hinblick auf die Struktur oder Farbe täuschend ähnlich sind.

Insbesondere eignen sich die nach dem erfindungsgemäßen Verfahren hergestellten Glasschaumsteine als Füllmaterial Gabionen, Gabionenzäune und Gabionenwände. Vorteilhafterweise muss dabei wegen des geringen Gewichtes der Glasschaumsteine und wegen der geringen Traglast im Hinblick auf die Stabilität der Gabionen kein großer Aufwand betrieben werden. Extrem gut eignen sich die nach dem erfindungsgemäßen Verfahren hergestellten farbigen Glasschaumsteine als Randeinfassungen im Garten, beispielsweise als Einfassungen für Bäume und Beete. Die vorliegenden Glasschaumsteine eignen sich auch als farbige Drainagenabdeckungen an Gebäuden. Vorteilhafterweise werden die vorliegenden Glasschaumsteine trotz ihres geringen Gewichts nicht durch den Wind verblasen. Ein direktes Bekleben von Wänden, Sockeln, Platten oder sonstigen Gegenständen ist zum Beispiel bei Verwendung von Silikon einfach zu bewerkstelligen. Ebenso ist es möglich, die nach dem erfindungsgemäßen Verfahren hergestellten Glasschaumsteine direkt aneinander zu verkleben, um beispielsweise Wände, Säulen und Torbögen etc. nachzubilden. Dies ist auf dem Gebiete der Gartendekoration und -gestaltung von Bedeutung.

## Patentansprüche

1. Verfahren zur Herstellung von farbigen Steinen, **dadurch gekennzeichnet, dass** in einem ersten Schritt aus in einem Mischer gemischten Glasschaumpartikeln und durch das dabei erfolgende Aneinanderschlagen derselben abgerundete Glasschaumsteine hergestellt werden und dass in einem nachfolgenden zweiten Schritt die abgerundeten Glasschaumsteine mit einer Farbbeschichtung versehen werden.

2. Verfahren nach Anspruch 1, **dadurch gekennzeichnet, dass** die verwendeten Glasschaumpartikel aus einem plattenförmigen Schaumstoffmaterial gefertigt werden, das in eine gewünschte Kornfraktion zerbrochen wird.

3. Verfahren nach Anspruch 1 oder 2, **dadurch gekennzeichnet, dass** Glasschaumpartikel mit einer Kornfraktion verwendet werden, die in einen Bereich von 1 bis 20 Zentimetern liegt.

4. Verfahren nach einem der Ansprüche 1 bis 3, **dadurch gekennzeichnet, dass** die Glasschaumsteine nach dem ersten Schritt gesiebt werden, um überschüssigen Abrieb zu entfernen.

5. Verfahren nach einem der Ansprüche 1 bis 4, **dadurch gekennzeichnet, dass** nach dem ersten Schritt aus den Glasschaumsteinen vorbestimmte Korngrößen ausgesiebt werden.

6. Verfahren nach einem der Ansprüche 1 bis 5, **dadurch gekennzeichnet, dass** eine Farbbeschichtung aufgebracht wird, die aus einer oder zwei aushärtbaren Komponenten, beispielsweise aus PUR, Epoxy, Acryl oder Polyester bestehen.

7. Verfahren nach einem der Ansprüche 1 bis 6, **dadurch gekennzeichnet, dass** das Mischen der Glasschaumpartikel in dem ersten Schritt in einem Trommel- oder Zwangsmischer oder in einem Freifallmischer ausgeführt wird.

8. Verfahren nach einem der Ansprüche 1 bis 7, **dadurch gekennzeichnet, dass** das Aufbringen der Farbbeschichtung beim zweiten Schritt in einem Mischer, vorzugsweise einem Freifall-, Trommel- oder Zwangsmischer ausgeführt wird.
